# FASCICULE DE BREVET EUROPEEN

(11) **EP 2 125 409 B1**
(45) Date de publication et mention de la délivrance du brevet: **16.10.2013**
(21) Numéro de dépôt: 07847950.8
(22) Date de dépôt: 06.12.2007
(51) Int. Cl.: B60J 7/02

(54) **PAVILLON VITRÉ DE VÉHICULE AUTOMOBILE, PROCÉDÉ DE MONTAGE ET VÉHICULE CORRESPONDANTS**
DACHFENSTER VON EINEM MOTORFAHRZEUG, VERFAHREN ZUR MONTAGE UND DAZUGEHÖRIGES MOTORFAHRZEUG
BLAZED ROOF OF A MOTOR VEHICLE, CORRESPONDING METHOD OF ASSEMBLY AND CORRESPONDING VEHICLE

(30) Priorité: 06.12.2006 FR 0610663
(43) Date de publication de la demande: 02.12.2009
(73) Titulaire: Advanced Comfort Systems France SAS - ACS France, 79300 Bressuire (FR)
(72) Inventeur: BILLY, David, 79300 Bressuire (FR); FOUREL, Pascal, 35400 Saint-Malo (FR); SANDRIN, Xavier, 79300 Bressuire (FR)
(74) Mandataire: Bioret, Ludovic
(86) Numéro de dépôt international: PCT/EP2007/063483
(87) Numéro de publication internationale: WO 2008/068325

(56) Documents cités:
- EP-A- 0 529 288
- EP-A- 1 538 012
- EP-A- 1 559 600
- DE-A1- 19 914 427
- GB-A- 2 335 397

## Description

### 1. Domaine de l'invention

Le domaine de l'invention est celui des pavillons de véhicules automobiles. Plus précisément, l'invention concerne les pavillons vitrés comprenant au moins une ouverture coopérant avec un panneau vitré mobile coulissant

Par coulissant on entend dans la présente demande de brevet aussi bien le cas où le panneau vitré reste en permanence parallèle à un plan de référence (décomposition de son déplacement en deux mouvements rectilignes) ou présente un déplacement louvoyant.

### 2. Techniques de l'art antérieur

La tendance actuelle, en matière de véhicule automobile, qu'il s'agisse d'une automobile, d'un véhicule utilitaire, d'un camion, ou d'un autobus, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil, voir par exemple EP-A-1 559 600.

De façon à augmenter le clair de baie, on a d'autre part cherché à proposer des surfaces vitrées de grande taille tout en minimisant le nombre de panneaux vitrés du pavillon.

Il a également fallu tenir compte du fait que ces surfaces vitrées doivent s'intégrer dans les pavillons de véhicules actuels ou futurs qui présentent des formes fuyantes et sont généralement non plans et le plus souvent incurvés ou galbés dans le sens de la largeur et également parfois dans le sens de la longueur.

D'autre part, on a proposé des solutions pour dégager des ouvertures dans le pavillon, notamment pour pouvoir former un module de toit ouvrant.

Ainsi, une technique couramment répandue pour l'ouverture et la fermeture des vitres de pavillon, et notamment des vitres de « toit-ouvrant » met en oeuvre des vitres mobiles entrebâillantes, montées sur un cadre et pouvant basculer autour d'un axe solidaire du plan du pavillon pour fournir une ouverture réduite de la vitre, généralement de petite taille.

Cette technique présente l'inconvénient de ne pas permettre qu'une libération partielle de l'ouverture coïncidant avec la surface de la vitre lorsque celle-ci est refermée.

Une autre technique de toit ouvrant également utilisée de façon classique consiste à rendre la vitre mobile au-dessus ou au-dessous du pavillon dans un plan sensiblement parallèle au plan du pavillon. On connaît ainsi une première technique de pavillon percé d'une baie pouvant être obturée par un panneau vitré coulissant logé dans la garniture du pavillon. Un inconvénient de cette technique est que les dimensions des ouvertures dans le pavillon, et consécutivement des surfaces vitrées permettant de les obturer, sont limitées.

Dans le cas où cette approche est mise en oeuvre pour des surfaces vitrées couvrant la largeur d'un pavillon, on a proposé de faire coulisser les bords de la vitre dans des rails de guidage disposés le long des longerons du pavillon.

On a également proposé de faire coulisser la vitre mobile au moins partiellement le long de la lunette arrière ou de faire pénétrer ou sortir la vitre mobile d'un logement spécifique situé, par exemple, dans la garniture du pavillon pour augmenter la surface d'ouverture dans le pavillon.

Cette technique présente cependant de nombreux inconvénients.

Ainsi, cette technique de guidage des bords de la vitre impose que les bords du panneau vitré guidés dans des rails soient parallèles, ou en d'autres termes un guidage rectiligne, pour éviter des jours inesthétiques qui pourraient apparaître entre les bords guidés de la vitre et le pavillon. Il en résulte de nombreuses adaptations pour solidariser la vitre coulissante à la carrosserie tout en suivant le profil longitudinal, généralement courbe, du pavillon et notamment pour dissimuler, en apposant des caches supplémentaires, les moyens de guidage, d'actionnement et d'entraînement, ce qui réduit la surface vitrée du pavillon.

D'autre part, sur le plan esthétique, cette technique ne permet pas d'obtenir, vu de l'extérieur, un aspect lisse, affleurant avec la carrosserie, en présence d'un cadre de guidage de la vitre mobile.

En outre, les moyens de guidage, d'actionnement et d'entraînement de la vitre mobile sont lourds, encombrants et complexes à monter. Il est donc nécessaire de prévoir un volume de logement en conséquence, nuisant au volume disponible à l'intérieur du véhicule, si la vitre mobile coulisse à l'intérieur du véhicule.

Ils ont de plus un coût de fabrication élevé et posent classiquement des problèmes d'étanchéité. Le montage sur le véhicule et la maintenance sont également complexes. Ils imposent en outre des contraintes sur le plan de l'ergonomie.

### 3. Objectifs de l'invention

L'invention a notamment pour objectif de pallier les différents inconvénients de ces techniques connues.

Plus précisément, un objectif de l'invention est de fournir une technique de pavillon essentiellement vitré, qui soit le plus possible affleurant avec la carrosserie du véhicule automobile, et qui permette une ouverture maximisée. En d'autres termes, un objectif de l'invention est d'améliorer le rendu esthétique du pavillon tout en améliorant ses performances aérodynamiques, en fournissant cet aspect affleurant.

En d'autres termes encore, un objectif de l'invention est de réduire ou supprimer sinon la présence du moins l'impression visuelle de rupture que constitue un cadre, de manière que la surface vitrée soit perçue comme une portion transparente de faisant continuité avec la carrosserie.

Un autre objectif de l'invention est de fournir une telle technique, qui permette de simplifier la fabrication et le montage du pavillon, et donc de réduire fortement les coûts correspondants.

L'invention a également pour objectif de fournir une telle technique, augmentant le clair de baie.

Encore un autre objectif de l'invention est de fournir une telle technique, permettant un remplacement d'un pavillon de véhicule composé d'une vitre fixe par un pavillon selon l'invention, sans adaptation particulière sur le véhicule.

### 4. Principes généraux de l'invention

Ces objectifs, ainsi que d'autres qui apparaîtront plus clairement par la suite, sont atteints selon l'invention à l'aide d'un pavillon vitré de véhicule automobile, comprenant au moins une ouverture.

Selon l'invention, un tel pavillon comprend une structure vitrée fixe portant au moins un élément coulissant à l'intérieur dudit véhicule et destiné à fermer la ou une desdites ouvertures. Ladite structure vitrée présentant un contour extérieur défini pour coïncider avec une bordure de réception prévue à cet effet sur le châssis dudit véhicule, de façon que ledit contour puisse être solidarisé à ladite bordure de réception, de façon affleurante, chacun desdits éléments coulissants étant guidé le long de deux rails solidarisés à la surface de ladite structure fixe, dans une région éloignée dudit contour extérieur de façon à ne pas interférer avec la solidarisation de ce dernier à ladite bordure de réception.

Le pavillon de l'invention comprend également au moins un élément de retenue, dont une première extrémité est solidaire d'un desdits rails et la seconde extrémité est solidaire dudit châssis, chacun des éléments de retenue étant disposé perpendiculairement audit rail.

Ainsi, on obtient un pavillon simple à réaliser et à monter, offrant une bonne qualité d'ouverture et pouvant être décliné pour offrir une large gamme de fonctionnalités, de formes et d'aspects (par exemple, en offrant une ou plusieurs ouvertures de taille pouvant être ajustées simplement, ...). D'autre part le pavillon ainsi mis en oeuvre répond aux exigences et attentes actuelles en termes notamment de qualité esthétique, du fait de l'aspect affleurant du pavillon, de sécurité vis-à-vis des bris de glace en raison de la présence de l'élément de retenue, de qualités aérodynamiques, de facilité de montage et, pour certains modèles de véhicule, de poids du pavillon.

Il convient de noter l'importance de l'élément de retenue, pouvant prendre par exemple la forme d'un té, pour l'homologation d'un tel pavillon au regard des aspects réglementaires et/ou législatifs relatifs à la sécurité des véhicules. En effet, il est important que, en cas de bris de la structure vitrée, l'élément mobile reste maintenu solidaire de la carrosserie (bien qu'il ne soit plus solidaire de la structure vitrée, détruite), et ne tombe pas sur les passagers du véhicule.

Les rails le long desquels guidant lesdits éléments coulissants sont guidés peuvent comprendre en outre des moyens de guidage d'un store et/ou d'un vélum d'occultation d'au moins une partie de la surface de la structure vitrée et/ou des éléments coulissants.

De façon avantageuse, lesdits rails portent des moyens de décalage de l'élément coulissant auquel ils sont associés, de façon à amener ledit élément coulissant dans le plan de ladite structure vitrée fixe, pour fermer ladite ouverture.

Ainsi, un élément coulissant peut être amené de son plan de coulissement, situé de manière préférée sous la surface vitrée, dans le plan de la surface vitrée du pavillon, par exemple, en un mouvement vertical ou encore en un mouvement combinant un déplacement horizontal et un déplacement vertical.

Préférentiellement, les moyens de décalage comprennent des moyens d'assistance et/ou de démultiplication, facilitant le passage dans le plan de ladite structure vitrée fixe.

Ainsi les efforts sont réduits pour manipuler l'élément coulissant, ce qui est particulièrement avantageux pour une manipulation nécessitant d'avoir les bras tendus ou partiellement tendus vers le haut, que l'espace prévu pour se mouvoir dans l'habitacle d'un véhicule reste limité, voire exigu, et que la pesanteur s'oppose au déplacement vers le haut de l'élément coulissant.

Avantageusement un tel pavillon comprend des moyens de verrouillage dudit élément coulissant dans au moins une position prédéterminée.

Ainsi, l'ouverture du pavillon peut être maintenue fermée simplement et efficacement. On peut prévoir en outre que l'élément coulissant peut être bloqué dans plusieurs positions d'ouverture partielle et/ou complète du pavillon, à l'aide des mêmes moyens.

Selon un aspect préféré, lesdits moyens de verrouillage comprennent au moins un pêne de verrouillage, collaborant avec au moins une gâche formée dans un desdits rails, et des moyens d'actionnement du ou desdits pênes. Ledit élément coulissant présentant un premier et un second bord sensiblement perpendiculaires à son axe de coulissement, le ou lesdits pênes sont montés au voisinage dudit premier bord et lesdits moyens d'actionnement sont montés au voisinage dudit second bord, des moyens de transmission reliant lesdits moyens d'actionnement et le ou lesdits pênes.

Ainsi, il devient aisé de monter et de dissimuler les moyens de verrouillage en les disposant sur le contour de l'élément coulissant, tout en plaçant les moyens d'actionnement de façon accessible.

Selon un aspect préféré complémentaire, un tel pavillon comprend deux pênes coopérant respectivement avec chacun desdits rails, et lesdits moyens d'actionnement sont placés au milieu dudit second bord.

Selon un autre aspect avantageux, au moins un desdits éléments coulissants comprend au moins un élément de renfort s'étendant sensiblement perpendiculairement à son axe de coulissement.

Ainsi, lors de l'éclatement accidentel de l'élément coulissant ou de la structure vitrée, le châssis et la carrosserie du véhicule, et notamment la bordure définissant le pavillon sont maintenus de façon renforcée, le renfort s'opposant à leur déformation. D'autre part, il est alors possible de fixer des charges plus conséquentes sur l'élément coulissant sans que ceci altère sa capacité à coulisser de façon satisfaisante dans les rails.

Dans un mode de réalisation avantageux de l'invention, ledit élément coulissant comprend un cadre fonctionnel s'étendant sur son contour.

Ainsi, on dispose d'une part d'un cache pour, par exemple, soustraire à la vue les moyens de verrouillage, et d'autre part d'un support pour recevoir des éléments fonctionnels tels que des moyens d'éclairage, ...

Avantageusement, ledit cadre fonctionnel forme et/ou porte lesdits éléments de renfort.

Par exemple, le cadre et les éléments de renforts peuvent être thermoformés, ou injectés, dans une même opération, ce qui réduit les coûts de fabrication du pavillon.

De façon avantageuse, lesdits moyens de renfort coopèrent avec lesdits rails et/ou lesdits moyens de retenue et/ou ladite bordure de réception.

Selon encore un autre aspect avantageux, au moins un desdits éléments coulissants comprend des moyens de récupération et d'évacuation de liquide.

Ainsi, le pavillon permet l'évacuation de l'eau de pluie ou de condensation qui s'est déposée sur l'élément coulissant et qui risque de se déverser par gravité dans l'habitacle lorsque l'élément coulissant est déverrouillé ou déplacé.

Préférentiellement ledit cadre fonctionnel porte au moins un réservoir.

Avantageusement, un tel pavillon comprend des moyens de connexion, au moins dans une position ouverte dudit élément coulissant, du ou desdits réservoirs à des moyens d'évacuation de liquide vers l'extérieur dudit véhicule.

Ainsi l'eau peut être évacuée quelle que soit la position d'ouverture de l'élément coulissant.

Selon un autre aspect avantageux de l'invention, ledit élément coulissant porte un joint d'étanchéité, monté de façon à diriger le liquide vers le ou lesdits réservoirs.

Selon un autre aspect avantageux, le ou lesdits éléments coulissants et/ou lesdits moyens de verrouillage sont motorisés.

Avantageusement, le ou lesdits éléments coulissants et/ou lesdits moyens de verrouillage sont contrôlés par des moyens de commande à distance.

Ainsi, il n'est pas nécessaire que l'occupant du véhicule se « contorsionne » pour déplacer ou verrouiller l'élément coulissant, ce qui est particulièrement avantageux lorsque l'amplitude de déplacement et/ou la masse de l'élément coulissant sont importantes.

Selon un mode de réalisation particulier de l'invention, ladite structure vitrée fixe et/ou le ou lesdits éléments coulissants comprennent un assemblage d'éléments superposés, formé d'au moins deux éléments transparents solidarisés par un cadre de liaison.

Par transparent, on entend un élément laissant passer la lumière, au moins partiellement, notamment cette expression englobe des vitres teintées ou traitées contre certains rayonnements.

Ainsi l'un des éléments transparents peut être employé à fournir un aspect particulier à l'élément coulissant et l'autre élément transparent à fournir les caractéristiques techniques requises. Ceci permet également de renforcer l'isolation thermique et acoustique, notamment en emprisonnant une lame d'air « en sandwich » entre les deux éléments. Il convient de noter que les éléments transparents de l'assemblage peuvent être réalisés dans le même matériau, par exemple du verre (on parlera alors de double vitrage), du verre organique, ... ou dans des matériaux différents, par exemple par assemblage d'un élément en verre sur un élément en verre organique (de façon préférée, on désignera alors un tel assemblage par le terme « double peau »).

Préférentiellement, ladite structure vitrée fixe et/ou le ou lesdits éléments coulissants comprenant un assemblage d'éléments superposés porte au moins un store ou un vélum d'occultation d'au moins une portion de la surface transparente.

Comme cela a été indiqué précédemment, il convient de noter qu'il peut être prévu que de lesdits rails le long desquels sont guidés lesdits éléments coulissants comprennent des moyens de guidage, incluant par exemple une glissière de guidage, pour guider le store et/ou le vélum.De façon préférée, au moins un desdits stores ou velums circulent entre lesdits éléments transparents.

Ainsi, le store ou le vélum ne s'étend pas à l'intérieur de l'habitacle et ne réduit donc pas l'espace intérieur. Ceci peut également permettre de s'affranchir de la présence de baleines.

Selon un aspect particulièrement avantageux, ladite structure vitrée fixe et/ou le ou lesdits éléments coulissants présentent au moins un galbe.

Ainsi, le pavillon présente un aspect conforme aux attentes actuelles sur le plan esthétique.

De façon avantageuse, lesdits rails et/ou des moyens de guidage d'au moins un desdits éléments coulissants sont conformés de façon à compenser au moins un desdits galbes.

Ainsi, on compense les jeux pouvant apparaître entre la semelle généralement rectiligne du ou des rails et la structure vitrée.

Selon un mode de réalisation avantageux de l'invention, au moins un desdits galbes est imposé à ladite structure vitrée fixe et/ou au moins un desdits éléments coulissants par l'intermédiaire d'un desdits rails, ce dernier étant préformé.

Ainsi il n'est pas nécessaire de réaliser le galbe dans deux directions de la structure vitrée lors de sa fabrication; ce qui simplifie celle-ci.

Selon un mode de réalisation particulier de l'invention, un tel pavillon comprend deux ouvertures, et deux éléments coulissants.

Ainsi, par exemple, le conducteur et son passager avant, ou les occupants des sièges avant et arrière du véhicule, peuvent disposer de leur propre ouverture dans le pavillon. Il convient de noter que, de façon préférée, un tel pavillon comprend au plus deux ouvertures et deux éléments coulissants, de façon à ne pas être contraint de restreindre la mobilité des éléments coulissants et/ou de réduire la taille de ces éléments pour prendre en compte une interférence géométrique de ces éléments en position d'ouverture.

Selon encore un autre mode de réalisation particulier de l'invention, ladite structure vitrée fixe est formée d'au moins deux portions distinctes.

Selon un aspect des modes de réalisation précédents, ladite structure vitrée comprend deux portions symétriques, portant chacune une ouverture.

Il est alors possible d'envisager de partager un rail commun, sensiblement disposé sur l'axe central du pavillon pour guider chacun des deux éléments coulissants.

Avantageusement, au moins un desdits éléments coulissants comprend des moyens d'équilibrage, tendant à contrôler le déplacement dudit élément coulissant.

Ainsi, l'élément coulissant peut être guidé en coulissement tout en restant sensiblement centré sur l'axe principal du pavillon de façon à fournir un effet esthétique satisfaisant.

Selon un autre mode de réalisation particulier de l'invention, lesdits rails ne sont pas parallèles.

Ainsi, les rails peuvent être logés le long des longerons généralement non parallèles d'un véhicule actuel sans adaptation supplémentaire pour les dissimuler (par exemple par sérigraphie) et donc sans réduire autant que faire se peut le clair de baie. En outre de tels rails peuvent s'adapter au guidage d'un élément coulissant de forme non rectangulaire et par exemple trapézoïdale.

Préférentiellement, ladite structure vitrée fixe et/ou au moins un desdits éléments coulissants est réalisés selon un des modes de fabrication appartenant au groupe comprenant :
- le verre organique injecté ;
- le verre organique extrudé ;
- le verre organique thermoformé ;
- le verre trempé ;
- le verre feuilleté ;
- l'assemblage de deux couches superposées.

Par le terme verre organique, on regroupe, par exemple, des matériaux tels que le polycarbonate et le polyméthacrylate de méthyle, et que plus généralement on entend toute matière plastique fabriquée selon un procédé entièrement synthétique. Par ailleurs, dans le cas d'un assemblage de deux couches de verre superposées prenant une lame d'air « en sandwich », on emploiera indifféremment le terme de « double vitrage » ou de « double peau ».

Ainsi, on répond aux obligations normatives en matière de sécurité en cas de bris de surface vitrée. On notera que le polycarbonate peut dans certains cas être préféré de façon à réduire la masse totale du pavillon.

Selon un aspect avantageux de l'invention, un tel pavillon porte au moins un des équipements appartenant au groupe comprenant :
- les antennes ;
- les systèmes de portage tels que, par exemple, les galeries, les barres de toit, ... ;
- les joints d'étanchéité ;
- les éléments de renfort, par exemple sensiblement similaires à un cadre de structure, une traverse, un brancard, ... ;
- les moyens de filtrage et/ou d'aération et/ou de ventilation ;
- les enjoliveurs et/ou les joints de contour ;
- les films extérieurs de protection
- les moyens d'essuyage ;
- les appendices aérodynamiques ;
- les moyens de personnalisation ;
- les moyens de fixation de garniture et/ou d'habillage intérieur ;
- les rétroviseurs ;
- les moyens d'éclairage intérieur et/ou extérieur ;
- les cellules photovoltaïques ;
- les moyens de chauffage et/ou de dégivrage ;
- les moyens d'occultation ;
- les moyens d'isolation phonique et/ou thermique ;
- les pare-soleil ;
- les moyens de rangement ;
- les capteurs, notamment de pluie, de température et/ou d'ensoleillement.

Ainsi, l'invention permet donc de réaliser des pavillons pré-équipés (la liste des équipements ci-dessus n'étant pas limitative).

L'invention concerne également un procédé de montage de pavillons tels que décrits ci-dessus sur un véhicule automobile, comprenant les étapes suivantes :
- mise en place dudit pavillon sur ledit véhicule, de façon que le contour extérieur de ladite structure vitrée coïncide avec ladite bordure de réception prévue à cet effet sur le châssis dudit véhicule ;
- solidarisation dudit contour extérieur et de ladite bordure de réception, de façon affleurante.

Ainsi, il est seulement nécessaire de veiller à l'ajustement de la position de la structure vitrée fixe par rapport à la bordure de réception pour qu'un tel pavillon soit monté de façon satisfaisante sur le véhicule. D'autre part, le montage d'un tel pavillon sur le véhicule ne nécessitant pas d'étape autre que les étapes de mise en place et de solidarisation, il peut être envisagé d'utiliser, sans adaptation importante, une chaîne de montage classiquement mise en oeuvre pour rapporter sur le véhicule un pavillon fixe sans ouverture. Le montage d'un pavillon selon l'invention sur un véhicule peut par exemple être programmé dans le cadre d'une rotation des séries de véhicule montées sur une même chaîne, entre deux séries de véhicule à pavillon fixe sans ouverture.

Avantageusement, ladite étape de solidarisation comprend une solidarisation simultanée de ladite seconde extrémité avec ledit châssis.

Ainsi on simplifie le montage du pavillon sur le châssis en supprimant l'opération de solidarisation de l'élément de retenue avec le châssis.

L'invention concerne encore un véhicule automobile équipé d'un des pavillons tels que décrits ci-dessus.

### 5. Liste des figures

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés, parmi lesquels :
- la figure 1A illustre dans une vue en perspective un mode de réalisation d'un pavillon selon l'invention monté sur un véhicule ;
- la figure 1B présente le détail des éléments constitutifs de l'élément coulissant du pavillon selon la figure 1 ;
- la figure 2A illustre, dans une vue en coupe, le détail du dispositif permettant le repositionnement en position fermée, ou réciproquement le déverrouillage de l'élément coulissant de la figure 1, entre la position fermée et la position de dégagement ;
- la figure 2B illustre, dans une vue de détail, les moyens de guidage en coulissement de l'élément coulissant représenté figure 1 ;
- la figure 3 illustre le profil d'un élément de renfort monté sur le cadre fonctionnel de l'élément coulissant représenté figure 1 ;
- la figure 4A présente les éléments de récupération et d'évacuation de liquide du pavillon de la figure 1 ;
- la figure 4B est une vue en coupe des drains des éléments d'évacuation présentés à la figure 4A ;
- les figures 4C et 4D sont des vues de détail d'un élément de récupération et d'évacuation de liquide du pavillon dans une variante du mode de réalisation présenté en référence à la figure 1 ;
- la figure 5 illustre un procédé de montage du pavillon correspondant à la figure 1 sur le châssis d'un véhicule ;
- la figure 6 illustre un deuxième mode de réalisation de l'invention, pour lequel la structure vitrée comprend deux ouvertures symétriques ;
- la figure 7 illustre, dans une vue en coupe, le détail des éléments constitutifs d'un tube enrouleur d'un store d'occultation de la zone arrière de la structure vitrée.

### 6. Description d'un mode de réalisation particulier de l'invention

Comme déjà indiqué, le principe général de l'invention repose notamment sur une nouvelle approche de la mise en oeuvre d'un pavillon vitré pour véhicule automobile dans lequel une ouverture peut être libérée, et qui offre un aspect affleurant avec un élément de châssis de la carrosserie vu de l'extérieur du véhicule.

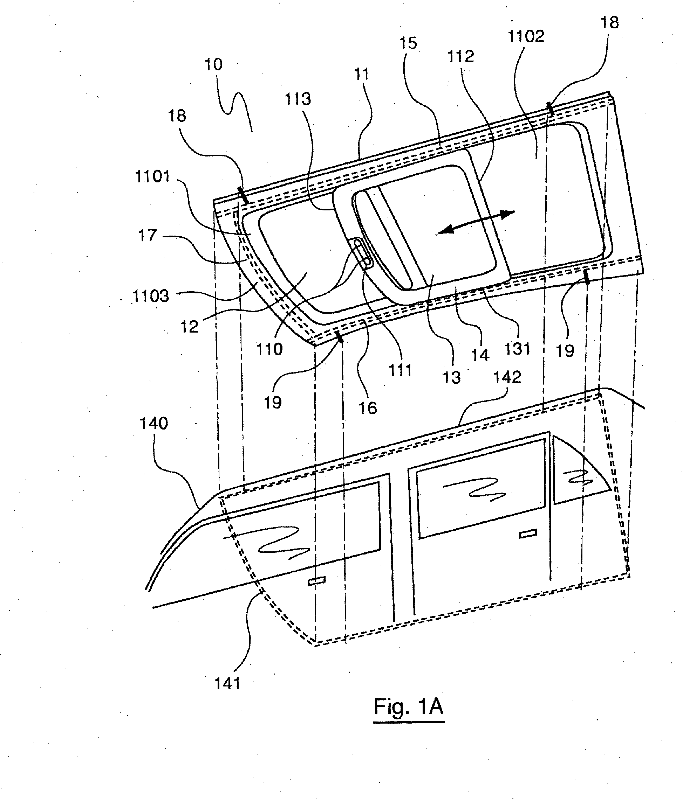

La figure 1A illustre, dans une vue en perspective, un mode de réalisation particulier de l'invention dans lequel le pavillon 10 (appelé par la suite "pavillon flush") comprend une structure vitrée fixe 11, percée d'une ouverture 12, et un élément mobile coulissant 131 (représenté en position d'ouverture partielle) par rapport à cette structure fixe.

La structure vitrée 11, par exemple en verre trempé et avantageusement galbée pour donner au pavillon une forme répondant aux critères actuels en termes de design, confort ou pénétration dans l'air... présente un contour extérieur qui coïncide sensiblement avec une bordure de réception 141 sur le châssis 140 du véhicule et est solidarisée par collage à cette bordure de réception de façon affleurante.

Il convient de noter que la technique des vitres toriques (c'est-à-dire présentant un galbe significatif dans au moins deux directions) pourvues d'une ouverture (un trou) susceptible par exemple d'être dégagée ou fermée à l'aide d'un élément coulissant semble être une solution de mise en oeuvre bien adaptée à la réalisation d'un pavillon selon l'invention. L'ouverture d'une telle vitre torique peut ainsi être obtenue par perçage ou par tout autre procédé satisfaisant dont on détaille ci-après un exemple.

Ainsi, dans ce mode de réalisation, la structure vitrée est constituée d'un premier panneau, encore appelé première portion, 1101, constitué d'un matériau transparent, présentant avantageusement une forme générale en « U » pour faciliter la découpe de l'ouverture et solidarisé par encapsulation de façon à présenter vu de l'extérieur un aspect sensiblement affleurant avec le châssis. Un second panneau vitré, encore appelé seconde portion, 1102 assemblé par collage avec ce premier panneau vitré permet de compléter le contour extérieur de la structure vitrée. Ainsi on facilite le montage et la fabrication du pavillon en comparaison d'une structure vitrée dans laquelle l'ouverture serait découpée ou réservée. En outre, de façon à prévenir le risque de bris du second panneau disposé à l'avant du véhicule suite à une projection de gravillon, il peut être envisagé d'utiliser un panneau renforcé, par exemple en verre armé. Le coût du remplacement de ce panneau est par ailleurs réduit en comparaison de celui d'un panneau en une seule pièce. Selon d'autres modes de réalisation, la structure vitrée peut comprendre plus de deux éléments, ou être formée d'une seule pièce.

Un cache 1103 recouvre le contour de la structure vitrée 11.

L'élément coulissant, en l'occurrence un panneau vitré 13, réalisé par exemple en polycarbonate thermoformé, et muni d'un cadre fonctionnel 14 s'étendant sur son contour, est guidé par rapport la structure fixe 11 par des rails 15 et 16. Ces rails 15 et 16, non parallèles dans ce mode de réalisation, sont rapportés, par exemple par collage, soudage, vissage ou tout autre technique adaptée, sur la face de la structure vitrée fixe tournée vers l'intérieur du véhicule et fixés à celle-ci de part et d'autre de l'ouverture 12, hors de la zone de contour extérieur de la structure 11, de façon à ne pas interférer avec le châssis lors du montage et de la solidarisation de la structure au châssis 140.

Dans le cas d'une structure vitrée en plusieurs éléments, les rails peuvent participer à leur assemblage. Ils peuvent également être, au moins en partie, moulés ou surmoulés sur cette structure vitrée.

Le profil des rails peut présenter une légère incurvation pour s'adapter au profil galbé de la structure vitrée fixe du pavillon. Comme on le verra par la suite, les rails peuvent également participer à la mise en oeuvre de ce galbe. Les rails 15 et 16 s'écartent progressivement dans ce mode de réalisation, en s'approchant de l'arrière du pavillon pour suivre la forme des longerons 142 du châssis 140 du véhicule.

Par ailleurs, les rails 15, 16 peuvent être conformés de façon à compenser l'évolution du galbe, et plus généralement le galbe, transversal de la structure vitrée 11. En effet, les rails couramment disponibles, s'ils peuvent être aisément mis en forme dans le sens longitudinal, présentent généralement une section de contour sensiblement rectangulaire. Il est donc utile de conformer les rails 15, 16 de façon à ce que leur surface en contact avec la structure vitrée 11 soit de forme adaptée au galbe de la structure vitrée ou le cas échéant, en prévoyant des moyens de compensation des jeux pouvant apparaître entre la structure vitrée 11 et les rails 15, 16.

En outre, les rails 15 et 16 s'étendent sensiblement jusqu'à la bordure de réception 141 de sorte que les extrémités des rails puissent être solidarisés à la bordure de réception du châssis de façon à renforcer la sécurité et répondre à des exigences normatives en matière de bris de panneaux vitrés, et en l'occurrence de la structure vitrée. Dans une variante de ce mode de réalisation, il peut également être envisagé que les extrémités des rails sont maintenus pressées entre la structure fixe et la bordure de réception du châssis.

Selon d'autres modes de réalisation, la liaison entre les rails et la bordure de la carrosserie peut se faire par l'intermédiaire de pièces de liaison, ou éléments de retenue, s'étendant par exemple perpendiculairement au rail, et présentant par exemple une forme générale de T. Il peut s'agir d'une extension formée dans la masse du rail, ou d'une pièce rapportée. Dans tous les cas, ces éléments de retenue permettent de retenir les rails, et l'élément vitré qu'ils portent, même si la structure vitrée qui les porte est détruite, protégeant ainsi les occupants à l'intérieur du véhicule.

On notera que, pour faciliter la lisibilité, la courbure des rails 15, 16 a été volontairement exagérée, sur la figure 1A.

Ainsi, dans ce mode de réalisation, le panneau 13 peut coulisser tout en étant guidé dans les rails 15 et 16 selon une direction sensiblement horizontale, dans un plan de coulissement, sensiblement parallèle au plan du pavillon 10, entre une ou plusieurs position(s) d'ouverture et une position intermédiaire de dégagement dans laquelle il est en regard de l'ouverture et dégagé de celle-ci.

Un déplacement, perpendiculaire au plan formé par la structure fixe, permet le passage de l'élément 131 de la position intermédiaire de dégagement dans laquelle il est déverrouillé, à une position fermée, et verrouillée, dans laquelle l'élément 131 se trouve dans le même plan que la structure fixe, et obture l'ouverture.

Ce mouvement d'enchâssement vertical est avantageux, car il permet de presser uniformément le joint d'étanchéité disposé entre l'élément 131 et la structure fixe, ce qui réduit les risques d'apparition de défauts d'étanchéité.

Bien sûr, d'autres mouvements sont possibles. Par exemple, le mouvement de l'élément coulissant peut suivre une courbe selon laquelle les deux mouvements (verrouillage/déverrouillage et coulissement) sont liés.

Une traverse d'inviolabilité 17 visant à réduire les risques d'effraction par forçage du panneau vitré coulissant 13 relie l'extrémité des rails 15 et 16 orientée vers l'avant du pavillon 10.

Il convient de noter que le panneau 13 est également pourvu de moyens (non représentés) facilitant son démontage en prévision de son remplacement ou de sa réparation. Il peut par exemple s'agir de tés de retenue démontables.

Par ailleurs, un élément de retenue 18 est solidarisé d'une part, par une première de ses extrémités, au rail 15 et d'autre part, par une deuxième extrémité, au châssis 140. Cet élément de retenue empêche, comme déjà mentionné, le rail 15 de chuter sur les occupants du véhicule en cas de dislocation ou de détérioration de la structure 11.

L'élément de retenue peut être constitué d'un tronçon de barre fixé perpendiculairement au rail et relié au châssis. Il peut être amovible, pour faciliter le montage ou permettre un remplacement. Il peut également permettre des fonctions complémentaires de passages d'au ou de câbles.

Il présente généralement une partie de faible épaisseur, permettant son passage entre la structure fixe et un cordon de colle et/ou un joint d'étanchéité, sans nuire à la fonction de ces derniers.

Au moins un second élément 19 de retenue, similaire à l'élément de retenue 18, complète ce dispositif réglementaire de mise en sécurité des occupants.

Le déverrouillage et le verrouillage du panneau 13 sont mis en oeuvre en actionnant des moyens d'actionnement de pêne(s), encore appelés poignée, 110, permettant de commander l'ouverture et/ou le déverrouillage du panneau 13, ou respectivement la fermeture et/ou le verrouillage du panneau en relâchant cette poignée. Lorsque le panneau 13 est en position verrouillée, et obture l'ouverture 12, cette poignée agit symétriquement sur des moyens de verrouillage comprenant un premier pêne de verrouillage collaborant avec une gâche (non représentés) solidaire du rail 15 et respectivement sur un deuxième pêne de verrouillage collaborant avec une gâche (non représentés) solidaire du rail 16. Dans une variante de ce mode de réalisation, on peut prévoir que les gâches sont formées directement dans les rails 15 et 16. Dans une autre variante de ce mode de réalisation, il peut également être envisagé de verrouiller l'élément coulissant avec un unique pêne collaborant avec une unique gâche en position fermée.

Les pênes sont montés symétriquement au voisinage d'un premier bord 112 de l'élément coulissant sensiblement perpendiculaire à l'axe de coulissement de l'élément coulissant.

Dans ce mode de réalisation, la poignée est solidarisée à chaque pêne par des moyens de transmission (non représentés) comprenant une tige rigide collaborant avec un levier. Dans une variante de ce mode de réalisation, le pêne peut être solidarisé à un pivot oblong coopérant avec le rail qui participe au dégagement ou réciproquement à la fermeture de l'élément coulissant.

D'autres moyens de transmission peuvent bien entendu être envisagés, comme, par exemple, un ensemble de câbles. Ces moyens de transmission sont montés au voisinage du second bord 113 de l'élément coulissant sensiblement perpendiculaire à son axe de coulissement, la poignée 110 étant avantageusement placée sensiblement au milieu de l'élément coulissant à proximité de ce second bord 113, de façon à faciliter sa manipulation par les occupants du véhicule.

Avantageusement, la poignée 110, lorsqu'elle est relâchée, est sensiblement affleurante avec la surface d'un cache 111 fixé sur le cadre 14.

La poignée 110 comprend en outre des zones dont l'ergonomie a été étudiée pour faciliter sa préhension. Dans un mode de réalisation particulier, il peut également être prévu que la commande d'ouverture et/ou de déverrouillage et/ou d'entraînement en coulissement du panneau coulissant soit mise en oeuvre par actionnement d'un dispositif motorisé de déverrouillage et/ou de coulissement, contrôlé par l'intermédiaire d'une commande déportée, ce dispositif motorisé pouvant être équipé de moyens anti-pincement, limitant le couple, l'alimentation ou la puissance du moteur si un corps étranger, par exemple une main, se trouve pris entre la structure fixe et le panneau mobile, notamment lors de la fermeture. Dans encore un autre mode de réalisation, on peut envisager de munir la poignée, pour sécuriser son fonctionnement, d'un bouton de blocage empêchant son mouvement, notamment pour protéger un enfant qui tenterait d'ouvrir par lui-même le panneau coulissant mobile.

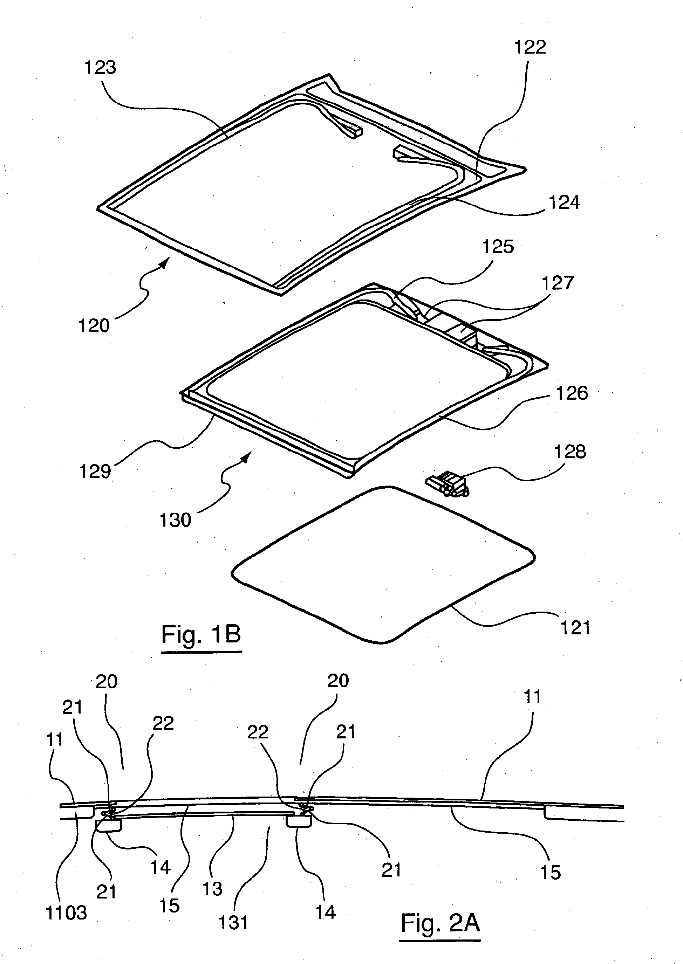

Comme cela apparaît sur la figure 1B, l'élément coulissant du pavillon est constitué de deux couches présentant un galbe, une couche tournée vers l'extérieur, appelée couche extérieure 120, et une couche tournée vers l'intérieur du véhicule, appelée couche intérieure 121, solidarisées par un cadre de liaison (non représenté). Avantageusement, un store 130 est monté sur le cadre 14 de façon qu'il s'étende entre les deux couches, dans un espace prévu à cet effet. Il est ainsi aisé de guider et conformer le store, sans qu'il soit nécessaire de prévoir des baleines ni de rails de guidage rapportés. En outre, le store ne s'étend pas à l'intérieur du véhicule, et ne réduit donc pas l'espace intérieur.

Préférentiellement, les deux couches 120 et 121 sont réalisées en matière plastique, telle que du polycarbonate, ce qui permet d'une part de réduire le poids du pavillon, et d'autre part d'y intégrer, par exemple par moulage ou surmoulage, plusieurs fonctions techniques complémentaires, permettant de simplifier et d'optimiser la fabrication et la mise en oeuvre d'un tel pavillon.

Selon le mode de réalisation illustré sur cette figure 1B, la couche extérieure 120, réalisée par exemple en polycarbonate, intègre une ou plusieurs fonctions techniques, et notamment :
- un parcours de collage 122 ;
- des fixations d'enjoliveurs de gouge (non représentés) ;
- des demi-parcours de câbles 123 et 124 pour l'entraînement du store ;

Cette couche peut comprendre une zone transparente, correspondant essentiellement à la zone centrale, et une zone opaque et/ou de couleur, destinée à dissimuler les fonctions techniques (et recouvrant donc notamment les éléments 122, 123 et 124).

La couche intérieure 121, également réalisée en polycarbonate, peut quant à elle être intégralement ou sur sa plus grande partie, transparente. Elle peut également intégrer un nombre élevé de fonctions techniques, telles que :
- des demi-parcours de câbles 125 et 126, complémentaires des demi-parcours 123 et 124 ;
- des moyens de fixation d'un jonc de fixation pour la garniture (non représenté) ;
- des moyens de fixation 127 d'un moteur 128 pour l'entraînement du store ;
- des moyens de réception 129 du store 130, par exemple de type store à enrouleur ;
- ...

Dans une variante de ce mode de réalisation, il peut être envisagé de remplacer le store par un vélum. Dans un mode de réalisation complémentaire de ce mode de réalisation, on peut également prévoir que la structure vitrée fixe présente un double vitrage formé de deux éléments vitrés solidarisés, par un cadre de liaison entre lesquels un store, lorsque son rideau est déployé, ou un vélum permet d'occulter au moins partiellement la surface de la structure vitrée.

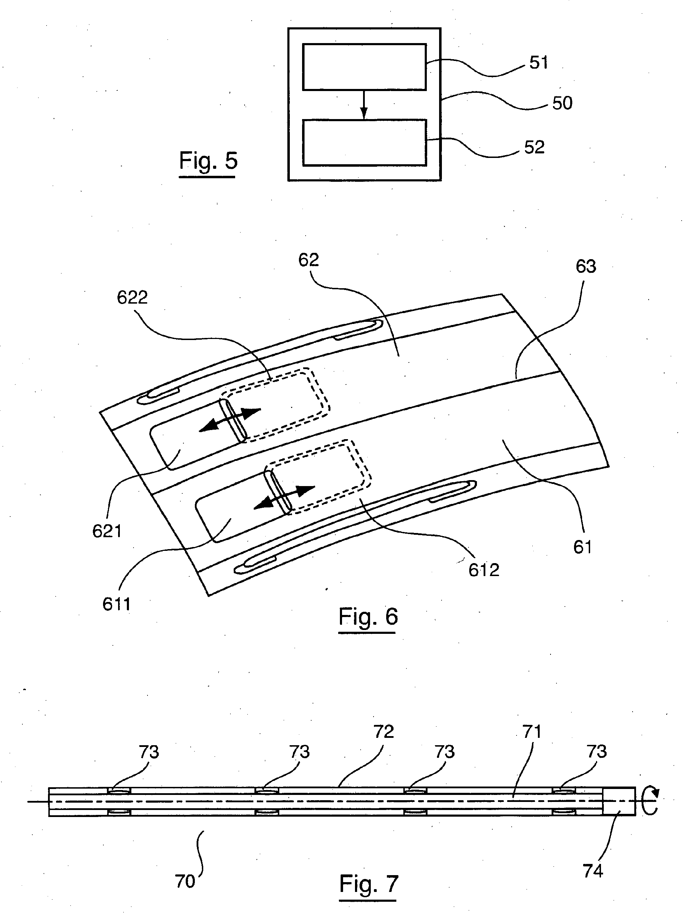

La figure 7 illustre dans une vue en coupe le détail des éléments constitutifs d'un tube enrouleur d'un store d'occultation de la surface arrière de la structure vitrée. Un tel tube enrouleur 70 est destiné à pouvoir adopter une courbure permettant de faire épouser à la toile du store le galbe transversal de la structure vitrée, en prenant une flèche de 15 à 25 millimètres dans sa partie centrale. Comme précisé en coupe sur la figure 7, un tel tube comprend un axe fixe 71 enveloppé par une gaine semi-rigide 72 mobile en rotation, sur laquelle s'enroule et se déroule la toile. Cette gaine est montée sur des paliers sphériques 73 autorisant la gaine à prendre le galbe souhaité. En outre des moyens d'entraînement 74 en rotation de la gaine 72 sont disposés à une des extrémités de celle-ci.

On peut également prévoir un tube enrouleur dont l'axe est galbé comme présenté dans la demande de brevet FR-0606962 du même Déposant que la présente demande.

Dans une autre variante du mode de réalisation présenté en référence à la figure 1, la barre de tirage d'un store destiné à occulter la zone arrière de la structure vitrée est solidarisée au bord arrière du cadre de l'élément coulissant, et le tube enrouleur de ce store est monté au voisinage du contour arrière de la structure vitrée ou sur la carrosserie à l'arrière du véhicule, à proximité de la bordure de réception. Ainsi, lors du coulissement vers l'avant ou vers l'arrière de l'élément coulissant, la zone arrière de la structure vitrée ne coïncidant pas avec une portion de l'élément coulissant peut être occultée efficacement et la toile peut présenter un aspect tendu satisfaisant. Des moyens de compensation de la position verticale de la barre de tirage agissent notamment pour maintenir la toile proche de la structure vitrée lorsque l'élément coulissant est dégagé de l'ouverture.

Il peut par ailleurs être envisagé de prévoir des moyens d'accrochage temporaire de la barre de tirage permettant de la décrocher manuellement. En outre, dans le cas où on prévoit de motoriser un tel store, une cellule photovoltaïque peut être fixée sur la structure fixe au voisinage de la traverse arrière pour d'alimenter en énergie le moteur de ce store de façon autonome.

On peut également prévoir de substituer au store un vélum, solidarisé au bord arrière du cadre de l'élément coulissant.

Dans une autre variante de ce mode de réalisation de l'invention, un ou plusieurs rideau(x) d'un store peut(-vent) être prévu(s) pour se déployer sous le pavillon et occulter au moins une partie de la surface vitrée de la structure vitrée et, le cas échéant, de l'élément coulissant.

Dans encore une autre variante de ce mode de réalisation, la structure vitrée et/ou l'élément coulissant peut(-vent) être constitué(s) d'une unique couche de vitrage.

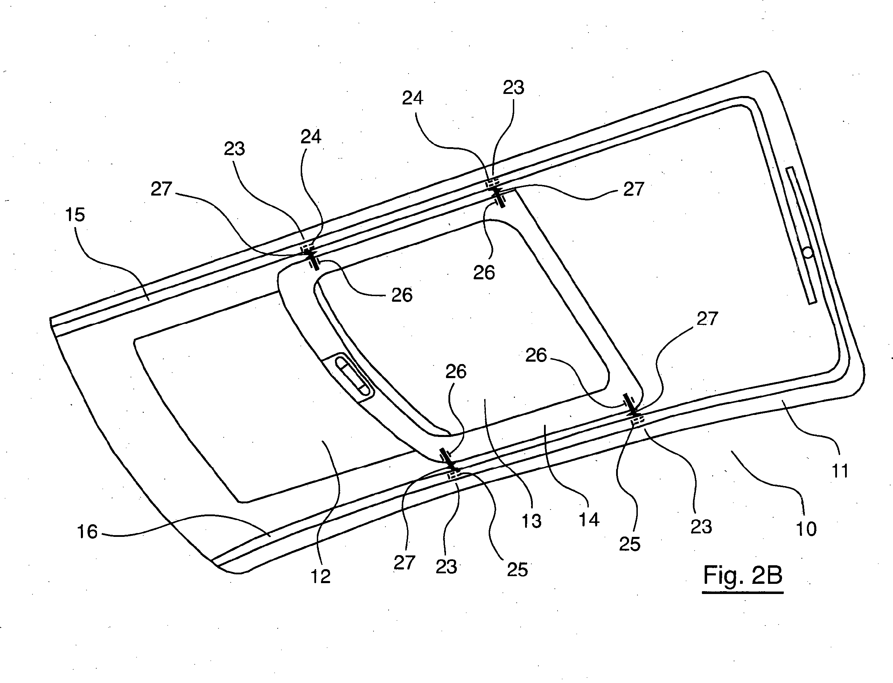

Les figures 2A et 2B illustrent un exemple de dispositifs de mise en mobilité de l'élément coulissant, dans des vues de détail, respectivement.

En référence à la figure 2A, de façon à permettre le repositionnement en position fermée de l'élément 13 par rapport à l'ouverture 12, ou vice-versa son dégagement par rapport à l'ouverture, des moyens de décalage 20 de l'élément 13 sont prévus. Ces moyens comprennent deux ensembles de bras articulés 21, solidaires chacun d'un bord longitudinal du cadre 14 et reposant dans les rails 15, 16, tendant à s'écarter sous l'action de moyens d'assistance 22, comprenant un ressort de rappel dans ce mode de réalisation de l'invention, lorsqu'ils sont libérés par la poignée 110 de façon à déplacer l'élément coulissant 131 vers le haut jusqu'à la position fermée et inversement, lorsque, sous l'action de la poignée 110, les deux bras sont rapprochés pour permettre de décaler l'élément 131 dans la position de dégagement. Avantageusement, les moyens de décalage comprennent également des moyens de démultiplication (non représentés) comprenant, par exemple, des leviers solidarisés d'une part aux bras et, d'autre part, au cadre de l'élément coulissant, pour faciliter le mouvement du panneau selon la direction verticale.

En référence à la figure 2B, et de façon à compenser l'écartement variable des rails 15 et 16 lors du coulissement de l'élément 131 en étant guidé par ceux-ci, le panneau 13 est solidaire de moyens de guidage mobiles 23 par rapport à celui-ci. Ceci permet d'optimiser le guidage de l'élément coulissant en permanence quelle que soit sa position et les jeux éventuels. Plus précisément, ces moyens de guidage 23 comprennent ici une première 24 et une deuxième 25 paire de patins de guidage pouvant coulisser respectivement dans les rails 15 et 16. L'extrémité libre de chaque patin est montée mobile, et plus exactement coulissante, par rapport à une glissière 26 fixée sur respectivement un coin du panneau. Dans une variante de ce mode de réalisation, il peut également être envisagé que certains patins sont fixes par rapport au panneau 13.

Dans ce mode de réalisation; les patins sont reliés par des câbles à un moteur d'entraînement (non représenté), logé dans le châssis 140, qui permet de contrôler le mouvement du panneau au moyen d'une commande électrique, par actionnement d'un bouton de commande, par pression sur celui-ci. Dans des variantes de ce mode de réalisation, il peut également être prévu d'actionner le bouton de commande en lui transmettant un mouvement de rotation, par exemple, ou en le tirant ou en le pinçant.

D'autre part, des moyens d'équilibrage tels que, par exemple dans ce mode de réalisation, des ressorts tarés 27 solidaires des patins, contrôlent le déplacement longitudinal de l'élément coulissant 131 de façon à ce qu'il reste sensiblement centré sur l'axe du pavillon 10.

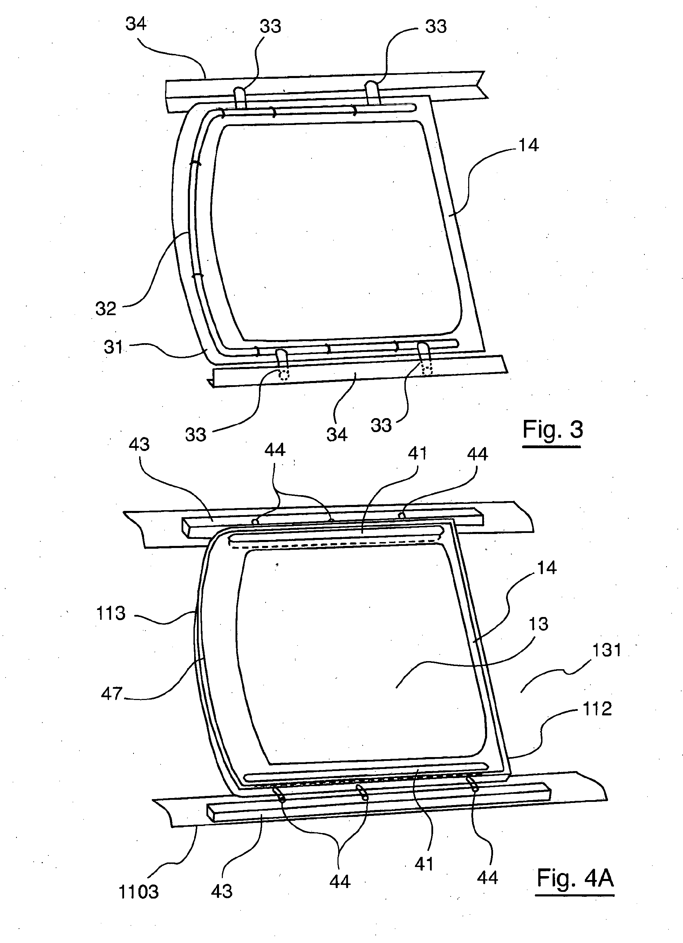

La figure 3 illustre le profil d'un élément de renfort 31 monté sur le cadre fonctionnel 14 de l'élément coulissant 131, perpendiculairement à la direction de coulissement de l'élément coulissant. Ainsi le cadre pourvu de l'élément de renfort permet d'assurer une fonction structurelle en cas d'éclatement du panneau vitré ou de la structure vitrée, en retenant l'élément coulissant. Dans ce mode de réalisation, cet élément de renfort 31 est composé d'un support métallique en forme de « U » 32 clippé sur le cadre muni de chaque côté des branches du U de tronçon de barre 33 dont les extrémités se prolongent jusqu'au châssis du véhicule. Lors du coulissement de l'élément coulissant, les extrémités des tronçons de barre se déplacent à l'aplomb d'éléments de retenue 34 présentant une forme de cornières, et fixées à l'intérieur du véhicule de chaque côté du châssis 140, en épousant le contour de la bordure de réception 141. L'élément de renfort permet ainsi de soutenir l'élément coulissant en reposant sur lés éléments de retenue 34 de chaque côté par des cornières en cas de rupture de la structure vitrée.

Il convient d'autre part de souligner que le support 32 de l'élément de renfort entoure avantageusement le panneau coulissant de façon à le protéger des chocs latéraux. En outre, pour renforcer cette protection, le support de l'élément de renfort peut, par exemple, être réalisé en acier à hautes performances ou présenter une section de forme adaptée.

Dans une variante de ce mode de réalisation, on peut également envisager que l'élément de renfort est maintenu par les rails et/ou les éléments de retenue.

Comme illustré sur la figure 4A sous forme schématique, le cadre fonctionnel 14 de l'élément coulissant porte respectivement deux réservoirs 41 sur chacun de ces premier 112 et second 113 bords, pour recevoir l'eau de pluie ou de condensation se déposant sur la surface du panneau vitré 11 lorsque l'ouverture du pavillon 10 est fermée ou au moins partiellement obstruée par l'élément coulissant 131. Un joint d'étanchéité 47 est monté sur le contour de là face supérieure du cadre 14 de l'élément coulissant de façon à retenir l'eau et la diriger vers les réservoirs.

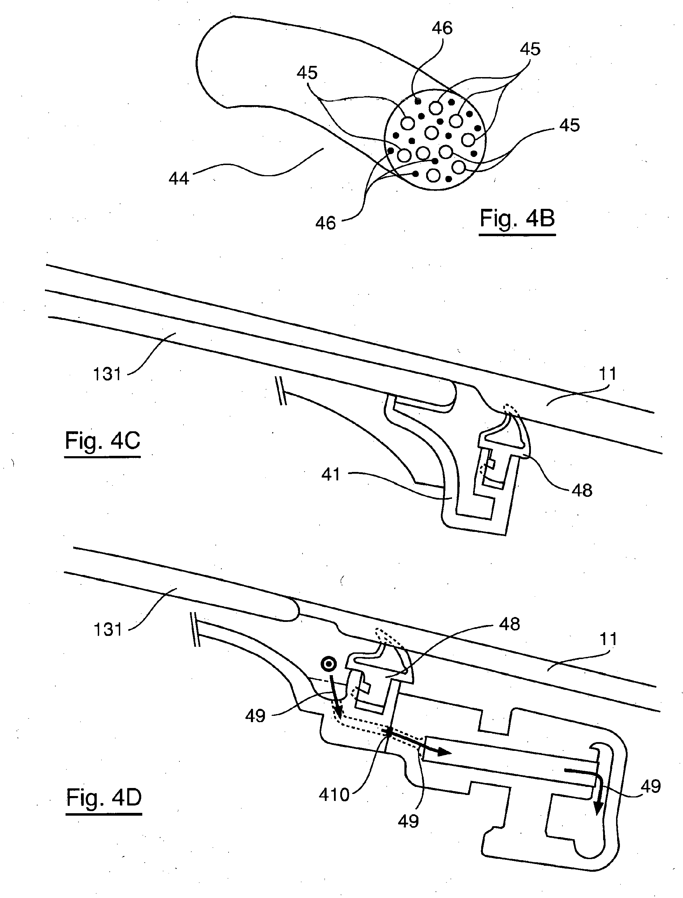

Le détail d'une section des réservoirs 41 est illustré en coupe sur la figure 4C, l'élément coulissant étant en partie dégagé de l'ouverture du pavillon. Le réservoir 41 porte un joint 48 dont la lèvre est en contact avec la surface de la structure vitrée pour éviter que de l'eau soit projetée hors du réservoir dans l'habitacle du véhicule.

Afin de limiter le volume et donc l'encombrement du réservoir, celui-ci communique par des moyens de connexion 42 à des moyens d'évacuation de l'eau, comprenant, par exemple, dans ce mode de réalisation une goulotte 43, vers l'extérieur du véhicule. Plus précisément, ces moyens de connexion comprennent une série de drains 44 souples espacés régulièrement le long du cadre, et frottant le long d'une goulotte 43 formée dans chacun des rails 15 et 16. Les drains 44, en caoutchouc; représentés en coupe sur la figure 4B, comprennent un réseau de conduits 45 parallèles de quelques (par exemple 3) millimètres de diamètre et de conduits 46 plus fins garnis de fibres pour bénéficier d'une évacuation d'une quantité d'eau par capillarité.

On notera que d'autres moyens de récupération et d'évacuation d'eau, et plus généralement de liquide, que l'ensemble réservoir, drain et joint d'étanchéité présenté(s) ici peuvent être prévus sans nuire à la généralité de l'invention.

La figure 4D illustre dans une vue en coupe le chemin d'évacuation (flèches 49) de l'eau recueillie à l'arrière du réservoir vers une goulotte 43 fixée sur la structure vitrée 11. Comme on peut le voir sur cette figure 4D, la connexion du réservoir avec la goulotte 43 est réalisée lorsque l'élément coulissant 131 est en position de fermeture de l'ouverture. En effet, dans cette position, le réservoir vient en regard de moyens de libération d'un passage 410 vers la goulotte.

La figure 5 illustre un procédé de montage 50 d'un pavillon pré-assemblé tel que décrit à la figure 1 sur le châssis d'un véhicule.

Ce montage comprend les étapes successives suivantes :
- étape 51 de mise en place du pavillon sur le véhicule, de façon que le contour extérieur de la structure vitrée coïncide avec la bordure de réception prévue à cet effet sur le châssis du véhicule ;
- étape 52 de solidarisation du contour extérieur et de la bordure de réception, de façon affleurante.

En outre, l'étape de solidarisation comprend une solidarisation simultanée de la seconde extrémité de l'élément de retenue avec le châssis.

Il convient de noter que l'assemblage des parties constitutives du pavillon peut également être réalisé en tout ou partie par le constructeur automobile sur le véhicule lui-même. D'autre part, l'utilisation d'une chaîne de montage classiquement dédiée au montage d'un pavillon fixe sans ouverture peut être envisagée sans adaptation importante.

### 7. Autres caractéristiques optionnelles et avantages

D'autres variantes de ce mode de réalisation peuvent être envisagées parmi lesquelles :
- la structure vitrée comprend deux (ou plus) ouvertures et deux éléments coulissants, et plus spécifiquement, comme représenté à la figure 6, la structure vitrée 11 comprend deux portions symétriques 61, 62 portant chacune une ouverture 611, 621 de façon, par exemple, à offrir à chacun des occupants des places avant du véhicule sa propre ouverture dont l'obturation par un élément coulissant 612, 622 est réglable indépendamment de l'autre ouverture et/ou élément coulissant. Il convient de noter que cette configuration spécifique permet de prévoir un rail 63 de guidage des éléments coulissants communs aux deux ouvertures ;
- les rails sont rapportés par clippage ou par repoussage/bouterollage sur la structure vitrée, ou formés directement sur celle-ci ;
- le premier panneau vitré présente une forme générale en « C » (en une ou plusieurs pièces) ;
- les rails et/ou des moyens de guidage de l'élément coulissant sont conformés de façon à compenser au moins un des galbes de la structure vitrée et/ou de l'élément coulissant ;
- l'élément de renfort est formé dans le cadre fonctionnel ;
- les moyens de guidage comprennent un ou plusieurs rouleau(x) et/ou galet(s) ;
- de petits canaux peuvent être percés et ou thermoformés dans l'élément coulissant pour faciliter l'évacuation de l'eau déposée sur celle-ci.

Dans encore une autre variante de l'invention, la structure vitrée est formée d'un unique panneau vitré percé d'une ouverture.

Il convient de noter que, dans le cas d'un panneau à double galbe, et de façon à donner un galbe dans deux directions à l'unique panneau d'une telle structure vitrée, ce galbe peut ne pas être réalisé lors de la fabrication de la vitre (ce que l'on ne sait pas faire de façon simple, notamment pour un élément en verre, dès lors qu'une ouverture est prévue). Il suffit de disposer d'une vitre à un seul galbe, pour réaliser aisément et efficacement le second galbe, à l'aide de rails, ou de tous autres éléments longitudinaux, eux-mêmes préformés avec le galbe souhaité (ou un galbe légèrement supérieur). Ainsi, si le galbe du ou des rails avant montage est supérieur à celui d'un panneau cylindrique équipé du ou des rails, lors du montage, la résistance au galbe du panneau fait que l'ensemble prend le galbe souhaité.

Dans un mode de réalisation complémentaire du mode de réalisation présenté ci-dessus, des moyens de verrouillage motorisés peuvent être prévus.

Dans encore un autre mode de réalisation, il peut être envisagé de réaliser la structure vitrée et/ou les éléments coulissants selon un mode de fabrication appartenant au groupe comprenant :
- le verre organique injecté ;
- le verre organique extrudé ;
- le verre organique thermoformé ;
- le verre trempé ;
- le verre feuilleté ;
- l'assemblage de deux couches superposées.

De nombreuses autres fonctions techniques peuvent être intégrées de la même façon au pavillon, par moulage ou surmoulage directement sur une et/ou éventuellement une deuxième couche vitrée. On obtient ainsi un pavillon prééquipé de façon simple et efficace, et peu coûteuse. De façon non exhaustive, ces fonctions techniques peuvent comprendre :
- des antennes ;
- des moyens de réception d'une antenne ;
- des systèmes de portage tels que, par exemple, des galeries, des barres de toit, ... ;
- des joints d'étanchéité ;
- des éléments de renfort, par exemple sensiblement similaires à un cadre de structure, une traverse, un brancard, ... ;
- des moyens de filtrage et/ou d'aération et/ou de ventilation ;
- des enjoliveurs et/ou les joints de contour ;
- des films extérieurs de protection
- des moyens d'essuyage ;
- des appendices aérodynamiques ;
- des moyens de personnalisation ;
- des moyens de fixation de garniture et/ou d'habillage intérieur ;
- des rétroviseurs ;
- des moyens d'éclairage intérieur et/ou extérieur ;
- des cellules photovoltaïques fixées sur la face extérieure de la structure fixe ou de celle d'au moins un des éléments coulissants ;
- des moyens de réception et/ou de fixation d'une barre de galerie ;
- dés moyens de dégivrage et/ou de chauffage ;
- des moyens d'occultation ;
- des moyens de fixation et de réception d'un rétroviseur et/ou d'un ou de plusieurs pare-soleil ;
- des moyens de solidarisation d'éléments de renfort ;
- des moyens d'aide à la solidarisation du pavillon (moyens de centrage, de guidage et/ou de fixation temporaire et/ou définitive) ;
- des joints d'isolation et d'étanchéité (entre, par exemple, les couches d'un double vitrage et entre le pavillon et le châssis) ;
- des moyens d'isolation phonique et thermique ;
- des moyens de réception et/ou de fixation d'un élément d'étanchéité ;
- des moyens de réception et/ou de fixation de moyens de filtrage et/ou d'aération et/ou de ventilation ;
- des enjoliveurs de gouge, ou des moyens de réception de ces derniers ;
- un parcours de collage ;
- un parcours de câble ;
- des moyens de réception et/ou de fixation d'un jonc de finition ;
- un jonc de finition ;
- des capteurs, notamment de pluie, de température et/ou d'ensoleillement ;
- des moyens de réception et/ou de fixation de moyens de rangement ;
- ...

## Revendications

1. Pavillon vitré (10) de véhicule automobile, comprenant au moins une ouverture (12),
**caractérisé en ce qu'**il comprend une structure vitrée fixe (11) portant au moins un élément coulissant (131) à l'intérieur dudit véhicule et destiné à fermer la ou une desdites ouvertures (12),
ladite structure vitrée (11) présentant un contour extérieur défini pour coïncider avec une bordure de réception (141) prévue à cet effet sur le châssis (140) dudit véhicule, de façon que ledit contour puisse être solidarisé à ladite bordure de réception (141), de façon affleurante,
chacun desdits éléments coulissants (131) étant guidé le long de deux rails (15,16) solidarisés à la surface de ladite structure fixe (11), dans une région éloignée dudit contour extérieur de façon à ne pas interférer avec la solidarisation de ce dernier à ladite bordure de réception (141),
et **en ce qu'**il comprend au moins un élément de retenue, dont une première extrémité (18) est solidaire d'un desdits rails (15, 16) et la seconde extrémité (19) est solidaire dudit châssis (140), chacun desdits éléments de retenue étant disposé perpendiculairement audit rail (15, 16).

2. Pavillon selon la revendication 1, **caractérisé en ce qu'**il comprend des moyens de verrouillage dudit élément coulissant dans (131) au moins une position prédéterminée,
**en ce que** lesdits moyens de verrouillage comprennent au moins un pêne de verrouillage, collaborant avec au moins une gâche formée dans un desdits rails (15,16), et des moyens d' actionnement (110) du ou desdits pênes,
et **en ce que**, ledit élément coulissant (131) présentant un premier (112) et un second (113) bords sensiblement perpendiculaires à son axe de coulissement, le ou lesdits pênes sont montés au voisinage dudit premier bord (112) et lesdits moyens d'actionnement (110) sont montés au voisinage dudit second bord (113), des moyens de transmission reliant lesdits moyens d'actionnement (110) et le ou lesdits pênes.

3. Pavillon selon la revendication 2, **caractérisé en ce qu'**il comprend deux pênes coopérant respectivement avec chacun desdits rails (15,16), et **en ce que** lesdits moyens d'actionnement (110) sont placés au milieu dudit second bord (113).

4. Pavillon selon l'une quelconque des revendications 1 à 3, **caractérisé en ce qu'**au moins un desdits éléments coulissants (131) comprend au moins un élément de renfort (31) s'étendant sensiblement perpendiculairement à son axe de coulissement.

5. Pavillon selon la revendication 4, **caractérisé en ce que** ledit élément coulissant (131) comprend un cadre fonctionnel (14) s'étendant sur son contour, et **en ce que** ledit cadre fonctionnel (14) forme et/ou porte lesdits éléments de renfort (31).

6. Pavillon selon l'une quelconque des revendications 4 et 5, **caractérisé en ce que** lesdits moyens de renfort (31) coopèrent avec lesdits rails (15,16) et/ou lesdits moyens de retenue (34) et/ou ladite bordure de réception (141).

7. Pavillon selon la revendication 5, **caractérisé en ce qu'**au moins un desdits éléments coulissants (131) comprend des moyens de récupération et d'évacuation de liquide,
et **en ce que** ledit cadre fonctionnel (14) porte au moins un réservoir (41).

8. Pavillon selon la revendication 7, **caractérisé en ce qu'**il comprend des moyens de connexion (42), au moins dans une position ouverte dudit élément coulissant (131), du ou desdits réservoirs (41) à des moyens d'évacuation de liquide vers l'extérieur dudit véhicule.

9. Pavillon selon l'une quelconque des revendications 7 et 8, **caractérisé en ce que** ledit élément coulissant (131) porte un joint d'étanchéité (47), monté de façon à diriger le liquide vers le ou lesdits réservoirs (41).

10. Pavillon selon l'une quelconque des revendications 1 à 9, **caractérisé en ce qu'**il comprend deux ouvertures (611,621), et deux éléments coulissants (612,622).

11. Pavillon selon la revendication 10, **caractérisé en ce que** ladite structure vitrée (11) comprend deux portions symétriques (61,62), portant chacune une ouverture.

12. Pavillon selon l'une quelconque des revendications 1 à 11, **caractérisé en ce qu'**au moins un desdits éléments coulissants (131) comprend des moyen d'équilibrage, tendant à contrôler le déplacement dudit élément coulissant (131).

13. Procédé de montage d'un pavillon selon l'une quelconque des revendications 1 à 12 sur un véhicule automobile, **caractérisé en ce qu'**il comprend les étapes suivantes :
- mise en place dudit pavillon (10) sur ledit véhicule, de façon que le contour extérieur de ladite structure vitrée (11) coïncide avec ladite bordure de réception (141) prévue à cet effet sur le châssis (140) dudit véhicule ;
- solidarisation dudit contour extérieur et de ladite bordure de réception (141), de façon affleurante.

14. Procédé de montage selon la revendication 13, **caractérisé en ce que** ladite étape de solidarisation comprend une solidarisation simultanée de ladite seconde extrémité avec ledit châssis (140).

15. Véhicule automobile **caractérisé en ce qu'**il comprend un pavillon selon l'une quelconque des revendications 1 à 12, comprenant au moins une ouverture (12),
ledit pavillon (10) comprenant une structure vitrée fixe (11) portant au moins un élément coulissant (131) à l'intérieur dudit véhicule et destiné à fermer la ou une desdites ouvertures (12),
ladite structure vitrée (11) présentant un contour extérieur coïncidant avec une bordure de réception (141) prévue à cet effet sur le châssis (140) dudit véhicule, de façon que ledit contour puisse être solidarisé à ladite bordure de réception (141), de façon affleurante,
chacun desdits éléments coulissants (131) étant guidé le long de deux rails (15,16) solidarisés à la surface de ladite structure fixe, dans une région éloignée dudit contour extérieur de façon à ne pas interférer avec la solidarisation de ce dernier à ladite bordure de réception (141),
et **en ce que** ledit pavillon (10) comprend au moins un élément de retenue, dont une première extrémité (18) est solidaire d'un desdits rails (15,16) et la seconde extrémité (19) est solidaire dudit châssis (140), chacun desdits éléments de retenue étant disposé perpendiculairement audit rail (15,16).

## Patentansprüche

1. Verglastes Karosserieoberteil (10) eines Kraftfahrzeugs, umfassend mindestens eine Öffnung (12),
**dadurch gekennzeichnet, dass** es eine feste Glasstruktur (11) umfasst, die mindestens ein Gleitelement (131) im Inneren des Fahrzeugs trägt und dazu bestimmt ist, die oder eine der Öffnungen (12) zu schließen,
wobei die Glasstruktur (11) eine äußere Kontur aufweist, die derart definiert ist, dass sie mit einem Aufnahmerand (141), der zu diesem Zweck auf dem Fahrgestell (140) des Fahrzeugs vorgesehen ist, derart zusammenfällt, dass die Kontur mit dem Aufnahmerand (141) bündig verbunden werden kann,
wobei jedes der Gleitelemente (131) entlang zweier Schienen (15, 16), die an der Oberfläche der festen Struktur (11) befestigt sind, derart in einem von der äußeren Kontur entfernten Bereich geführt ist, dass es nicht mit der Befestigung dieser letztgenannten am Aufnahmerand (141) interferiert,
und dass es mindestens ein Rückhalteelement umfasst, dessen erstes Ende (18) mit einer der Schienen (15, 16) verbunden ist, und dessen zweites Ende (19) mit dem Fahrgestell (140) verbunden ist, wobei jedes der Rückhalteelemente senkrecht zur Schiene (15, 16) angeordnet ist.

2. Karosserieoberteil nach Anspruch 1, **dadurch gekennzeichnet, dass** es Mittel zur Verriegelung des Gleitelements (131) in mindestens einer vorbestimmten Position umfasst,
dass die Verriegelungsmittel mindestens einen Riegel, der mit mindestens einem Schloss zusammenwirkt, das in einer der Schienen (15, 16) ausgebildet ist, und Mittel zur Betätigung (110) des oder der Riegel umfassen,
und dass, wobei das Gleitelement (131) einen ersten (112) und einen zweiten Rand (113) im Wesentlichen senkrecht zu seiner Gleitachse aufweist, der oder die Riegel in der Nähe des ersten Randes (112) und die Betätigungsmittel (110) in der Nähe des zweiten Randes (113) montiert sind, wobei Übertragungsmittel die Betätigungsmittel (110) und den oder die Riegel verbinden.

3. Karosserieoberteil nach Anspruch 2, **dadurch gekennzeichnet, dass** es zwei Riegel umfasst, die jeweils mit jeder der Schienen (15, 16) zusammenwirken, und dass die Betätigungsmittel (110) in der Mitte des zweiten Randes (113) angeordnet sind.

4. Karosserieoberteil nach einem der Ansprüche 1 bis 3, **dadurch gekennzeichnet, dass** mindestens eines der Gleitelemente (131) mindestens ein Verstärkungselement (31) umfasst, das sich im Wesentlichen senkrecht zu seiner Gleitachse erstreckt.

5. Karosserieoberteil nach Anspruch 4, **dadurch gekennzeichnet, dass** das Gleitelement (131) einen Funktionsrahmen (14) umfasst, der sich auf seiner Kontur erstreckt, und dass der Funktionsrahmen (14) die Verstärkungselemente (31) bildet und/oder trägt.

6. Karosserieoberteil nach einem der Ansprüche 4 und 5, **dadurch gekennzeichnet, dass** die Verstärkungsmittel (31) mit den Schienen (15, 16) und/oder den Rückhaltemitteln (34) und/oder dem Aufnahmerand (141) zusammenwirken.

7. Karosserieoberteil nach Anspruch 5, **dadurch gekennzeichnet, dass** mindestens eines der Gleitelemente (131) Mittel zur Wiedergewinnung und Ableitung von Flüssigkeit umfasst,
und dass der Funktionsrahmen (14) mindestens einen Behälter (41) trägt.

8. Karosserieoberteil nach Anspruch 7, **dadurch gekennzeichnet, dass** es Mittel (42) für den Anschluss des oder der Behälter (41) wenigstens in einer offenen Position des Gleitelements (131) an Mittel zur Ableitung von Flüssigkeit nach außen zum Fahrzeug umfasst.

9. Karosserieoberteil nach einem der Ansprüche 7 und 8, **dadurch gekennzeichnet, dass** das Gleitelement (131) eine Dichtung (47) trägt, die derart montiert ist, dass die Flüssigkeit zu dem oder den Behältern (41) geleitet wird.

10. Karosserieoberteil nach einem der Ansprüche 1 bis 9, **dadurch gekennzeichnet, dass** es zwei Öffnungen (611, 621) und zwei Gleitelemente (612, 622) umfasst.

11. Karosserieoberteil nach Anspruch 10, **dadurch gekennzeichnet, dass** dir Glasstruktur (11) zwei symmetrische Abschnitte (61, 62) umfasst, die jeweils eine Öffnung tragen.

12. Karosserieoberteil nach einem der Ansprüche 1 bis 11, **dadurch gekennzeichnet, dass** mindestens eines der Gleitelemente (131) Ausgleichsmittel umfasst, die darauf hinwirken, die Verschiebung des Gleitelements (131) zu steuern.

13. Verfahren zur Montage eines Karosserieoberteils nach einem der Ansprüche 1 bis 12 auf einem Kraftfahrzeug, **dadurch gekennzeichnet, dass** es die folgenden Schritte umfasst:
- Anbringen des Karosserieoberteils (10) auf dem Fahrzeug, so dass die äußere Kontur der Glasstruktur (11) mit dem Aufnahmerand (141) zusammenfällt, der zu diesem Zweck auf dem Fahrgestell (140) des Fahrzeugs vorgesehen ist;
- Verbindung der äußeren Kontur und des Aufnahmerandes (141) auf bündige Weise.

14. Montageverfahren nach Anspruch 13, **dadurch gekennzeichnet, dass** der Verbindungsschritt eine gleichzeitige Verbindung des zweiten Endes mit dem Fahrgestell (140) umfasst.

15. Kraftfahrzeug, **dadurch gekennzeichnet, dass** es ein Karosserieoberteil nach einem der Ansprüche 1 bis 12 besitzt, umfassend mindestens eine Öffnung (12),
wobei das Karosserieoberteil (10) eine feste Glasstruktur (11) umfasst, die mindestens ein Gleitelement (131) im Inneren des Fahrzeugs trägt und dazu bestimmt ist, die oder eine der Öffnung(en) (12) zu schließen,
wobei die Glasstruktur (11) eine äußere Kontur aufweist, die mit einem Aufnahmerand (141), der zu diesem Zweck auf dem Fahrgestell (140) des Fahrzeugs vorgesehen ist, derart zusammenfällt, dass die Kontur mit dem Aufnahmerand (141) bündig verbunden werden kann,
wobei jedes der Gleitelemente (131) entlang zweier Schienen (15, 16), die an der Oberfläche der festen Struktur befestigt sind, derart in einem von der äußeren Kontur entfernten Bereich geführt ist, dass es mit der Befestigung dieser letztgenannten am Aufnahmerand (141) nicht interferiert,
und dass das Karosserieoberteil (10) mindestens ein Rückhalteelement umfasst, dessen erstes Ende (18) mit einer der Schienen (15, 16) verbunden ist, und dessen zweites Ende (19) mit dem Fahrgestell (140) verbunden ist, wobei jedes der Rückhalteelemente senkrecht zur Schiene (15, 16) angeordnet ist.

## Claims

1. Glazed roof (10) for a motor vehicle, comprising at least one opening (12),
**characterised in that** it comprises a fixed glazed structure (11) carrying at least one element (131) that slides inside the said vehicle and is intended to close the said opening (12) or one of the said openings (12);
the said glazed structure (11) having an outer border which is defined to coincide with a receiving edge (141) provided for that purpose on the frame (140) of the said vehicle, so that the said border can be fastened to the said receiving edge (141) in a flush manner;
each of the said sliding elements (131) being guided along two rails (15, 16) which are fastened to the surface of the said fixed structure (11) in a region which is remote from the said outer border so as not to interfere with the fastening of the latter to the said receiving edge (141);
and **in that** said roof comprises at least one retaining element, of which a first end (18) is integral with one of the said rails (15, 16) and the second end (19) is integral with the said frame (140), each of the said retaining elements being disposed perpendicularly to the said rail (15, 16).

2. Roof according to Claim 1, **characterised in that** it comprises means for locking the said sliding element (131) in at least one predetermined position;
**in that** the said locking means comprise at least one locking latch, which cooperates with at least one catch formed in one of the said rails (15, 16), and means (110) for actuating the said latch or latches; and **in that**, the sliding element (131) having a first edge (112) and a second edge (113) which are substantially perpendicular to its axis of sliding, the said latch or latches is/are mounted in the vicinity of the said first edge (112) and the said actuating means (110) are mounted in the vicinity of the said second edge (113), transmitting means connecting the said actuating means (110) and the said latch or latches.

3. Roof according to Claim 2, **characterised in that** it comprises two latches which cooperate, respectively, with each of the said rails (15, 16), and **in that** the said actuating means (110) are positioned in the middle of the said second edge (113).

4. Roof according to any of Claims 1 to 3, **characterised in that** at least one of the said sliding elements (131) comprises at least one reinforcing element (31) which extends substantially perpendicularly to its axis of sliding.

5. Roof according to Claim 4, **characterised in that** the said sliding element (131) comprises a functional frame (14) which extends over its border,
and **in that** the said functional frame (14) forms and/or carries the said reinforcing elements (31).

6. Roof according to either of Claims 4 or 5, **characterised in that** the said reinforcing means (31) cooperate with the said rails (15, 16) and/or the said retaining means (34) and/or the said receiving edge (141).

7. Roof according to Claim 5, **characterised in that** at least one of the said sliding elements (131) comprises means for recovering and evacuating liquid,
and **in that** the said functional frame (14) carries at least one reservoir (41).

8. Roof according to Claim 7, **characterised in that** it comprises means (42) for connecting the said reservoir or reservoirs (41), at least when the said sliding element (131) is in an open position, to means for evacuating liquid to the outside of the said vehicle.

9. Roof according to either of Claims 7 or 8, **characterised in that** the said sliding element (131) carries a seal (47) which is mounted in such a way as to direct the liquid towards the said reservoir or reservoirs (41).

10. Roof according to any of Claims 1 to 9, **characterised in that** it comprises two openings (611, 621) and two sliding elements (612, 622).

11. Roof according to Claim 10, **characterised in that** the said glazed structure (11) comprises two symmetrical portions (61, 62), each of which carries an opening.

12. Roof according to any of Claims 1 to 11, **characterised in that** at least one of the said sliding elements (131) comprises balancing means, the aim of which is to control the displacement of the said sliding element (131).

13. Process for fitting a roof according to any of Claims 1 to 12 to a motor vehicle, **characterised in that** said process comprises the following stages:
- the placing of the said roof (10) in position on the said vehicle in such a way that the outer border of the said glazed structure (11) coincides with the said receiving edge (141) provided for that purpose on the frame (140) of the said vehicle;
- the fastening of the said outer border and of the said receiving edge (141) in a flush manner.

14. Fitting process according to Claim 13, **characterised in that** the said fastening stage comprises simultaneous fastening of the said second end to the said frame (140).

15. Motor vehicle, **characterised in that** it comprises a roof according to any of Claims 1 to 12 comprising at least one opening (12);
the said roof (10) comprising a fixed glazed structure (11) carrying at least one element (131) that slides inside the said vehicle and is intended to close the said opening (12) or one of the said openings (12); the said glazed structure (11) having an outer border that coincides with a receiving edge (141) provided for that purpose on the frame (140) of the said vehicle, so that the said border can be fastened to the said receiving edge (141) in a flush manner;
each of the said sliding elements (131) being guided along two rails (15, 16) which are fastened to the surface of the said fixed structure in a region which is remote from the said outer border so as not to interfere with the fastening of the latter to the said receiving edge (141);
and **in that** the said roof (10) comprises at least one retaining element, of which a first end (18) is integral with one of the said rails (15, 16) and the second end (19) is integral with the said frame (140), each of the said retaining elements being disposed perpendicularly to the said rail (15, 16).
